# DEMANDE DE BREVET EUROPEEN

(11) **EP 1 524 155 A1**
(43) Date de publication de la demande: **20.04.2005**
(21) Numéro de dépôt: 04300686.5
(22) Date de dépôt: 18.10.2004
(51) Int. Cl.: B60R 7/04

(54) **Agencement d'un rangement à l'intérieur d'un véhicule automobile**

(30) Priorité: 16.10.2003 FR 0312077; 14.01.2004 FR 0400323
(71) Demandeur: Renault s.a.s., 92100 Boulogne Billancourt (FR)
(72) Inventeur: Hischke, Udo, 78113, Grand Champ (FR)

(57) **Abrégé**

Agencement d'un rangement à l'intérieur d'un véhicule automobile, comportant un réceptacle dont une partie haute comporte une ouverture munie d'un couvercle qui est monté articulé par rapport au réceptacle entre une position fermée, dans laquelle il obture l'ouverture du réceptacle en s'étendant dans un plan sensiblement vertical, et une position ouverte, dans laquelle l'ouverture du réceptacle est au moins partiellement accessible, caractérisé en ce que le couvercle est monté mobile entre sa position fermée et une position d'utilisation, distincte de sa position ouverte, dans laquelle il est verrouillé en position horizontale de façon qu'il constitue une surface d'appui.

## Description

L'invention concerne l'agencement d'un rangement à l'intérieur d'un véhicule automobile, comportant un réceptacle dont une partie haute comporte une ouverture munie d'un couvercle qui est monté articulé par rapport au réceptacle entre une position fermée, dans laquelle il obture l'ouverture du réceptacle en s'étendant dans un plan sensiblement vertical, et une position ouverte, dans laquelle l'ouverture du réceptacle est au moins partiellement accessible.

Les espaces de rangement sont de plus en plus nombreux dans les véhicules. Il convient donc d'utiliser au maximum la place disponible en combinant notamment des espaces de rangement avec des surfaces d'appui. Il faut cependant que le rangement reste pratique d'utilisation et offre un volume de rangement le plus important possible.

Il est connu par la publication US-A-6116672 d'agencer dans une porte de véhicule un bac de rangement dont la partie supérieure est fermée par un couvercle pouvant passer d'une position fermée à une position ouverte par une rotation autour d'un axe horizontal longitudinal porté par une paroi de la porte. Cependant, ce dispositif n'est pas associé à une fonction d'appui.

Il est aussi connu un agencement dans lequel une console comporte un rangement dont une partie supérieure est munie d'un couvercle formant accoudoir lorsque le couvercle est en position fermée. Ce type de dispositif permet donc de cumuler les fonctions de couvercle de rangement et d'accoudoir. Cependant, la hauteur du rangement est limitée car il est nécessaire que le couvercle formant accoudoir soit dans une position suffisamment basse pour qu'un passager puisse y poser son coude confortablement. Il est donc difficile d'augmenter ainsi le volume disponible à l'intérieur du rangement. De plus, l'accoudoir étant assez éloigné du passager, ce dernier est obligé d'écarter le bras de façon importante pour pouvoir poser le coude sur l'accoudoir, ce qui n'est pas très confortable.
Afin de pallier ces inconvénients, l'invention a pour objet l'agencement d'un rangement comportant un couvercle formant une surface d'appui qui permet d'offrir un volume disponible important à l'intérieur du rangement.

L'invention a aussi pour objet l'agencement d'un rangement, comportant une surface d'appui, simple d'utilisation et confortable.
L'invention a de plus pour objet l'agencement d'un rangement comportant une surface d'appui qui est esthétique et qui présente un faible coût de fabrication.
L'invention a enfin pour objet l'agencement d'un rangement comportant une surface d'appui et dans lequel le rangement reste accessible, même dans le cas où le couvercle est en position accoudoir, par exemple.

Dans le but de répondre aux problèmes cités ci-dessus, l'invention propose !'agencement d'un rangement du type cité ci-dessus, caractérisé en ce que le couvercle est monté mobile entre sa position fermée et une position d'utilisation, distincte de sa position ouverte, dans laquelle il est verrouillé en position horizontale de façon qu'il constitue une surface d'appui.
Selon d'autres caractéristiques de l'invention :
- La surface d'appui est constituée par la face externe du couvercle.
- Le couvercle est monté à rotation autour d'un axe unique, agencé sensiblement au droit du bord supérieur de l'ouverture.
- Le couvercle est monté à rotation autour d'un axe unique agencé au droit du bord inférieur de l'ouverture.
- Le couvercle est monté à rotation autour d'un premier axe agencé au droit du bord inférieur de l'ouverture et d'un deuxième axe situé à mi-hauteur de l'ouverture.
- Le couvercle comporte un volet supérieur monté à rotation autour d'un axe supérieur agencé au droit du bord supérieur de l'ouverture et un volet inférieur monté à rotation autour d'un axe inférieur agencé au droit du bord inférieur de l'ouverture.
- Le couvercle comporte un cadre monté à rotation autour d'un axe agencé au droit du bord inférieur de l'ouverture et une partie centrale, solidaire du cadre et montée à rotation autour d'un axe situé à mi-hauteur de l'ouverture.
- Le réceptacle est ménagé à l'intérieur d'une porte et la surface d'appui constitue un accoudoir.
   D'autres caractéristiques et avantages de l'invention apparaîtront à la lecture de la description d'exemples de réalisation de l'agencement d'un rangement à l'intérieur d'un véhicule automobile en référence aux dessins annexés dans lesquels.
- La figure 1 est une vue en perspective de l'agencement d'un rangement selon l'invention en position fermée.
- La figure 2 représente l'agencement de la figure 1 en position ouverte.
- La figure 3 représente l'agencement de la figure 1 en position d'utilisation.
- La figure 4 est une vue schématique latérale de l'agencement de la figure 1.
- La figure 5 est une vue schématique latérale de l'agencement de la figure 2.
- La figure 6 est une vue schématique latérale de l'agencement de la figure 3.
- La figure 7 est une vue latérale schématique d'une première variante de l'agencement selon l'invention en position ouverte.
- La figure 8 représente la variante de la figure 7 en position d'utilisation.
- La figure 9 est une vue latérale schématique d'une deuxième variante de l'agencement selon l'invention en position ouverte.
- La figure 10 représente la variante de la figure 9 en position d'utilisation.
- La figure 11 est une vue latérale schématique d'une troisième variante de l'agencement selon l'invention en position ouverte.
- La figure 12 représente la variante de la figure 11 en position d'utilisation.
- La figure 13 est une vue latérale schématique d'une quatrième variante de l'agencement en position ouverte.
- La figure 14 représente la variante de la figure 13 en position d'utilisation.

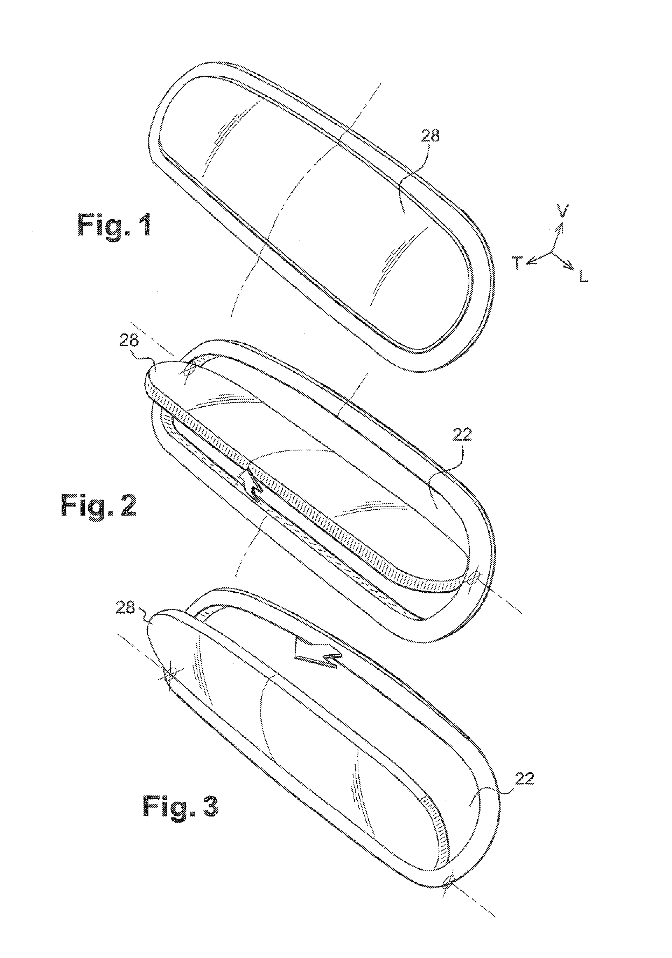

Dans la description qui va suivre, on adoptera à titre non limitatif une orientation longitudinale, verticale et transversale indiquée par le trièdre L,V,T de la figure 1.

Des éléments identiques ou analogues sont désignés par les mêmes chiffres de référence.

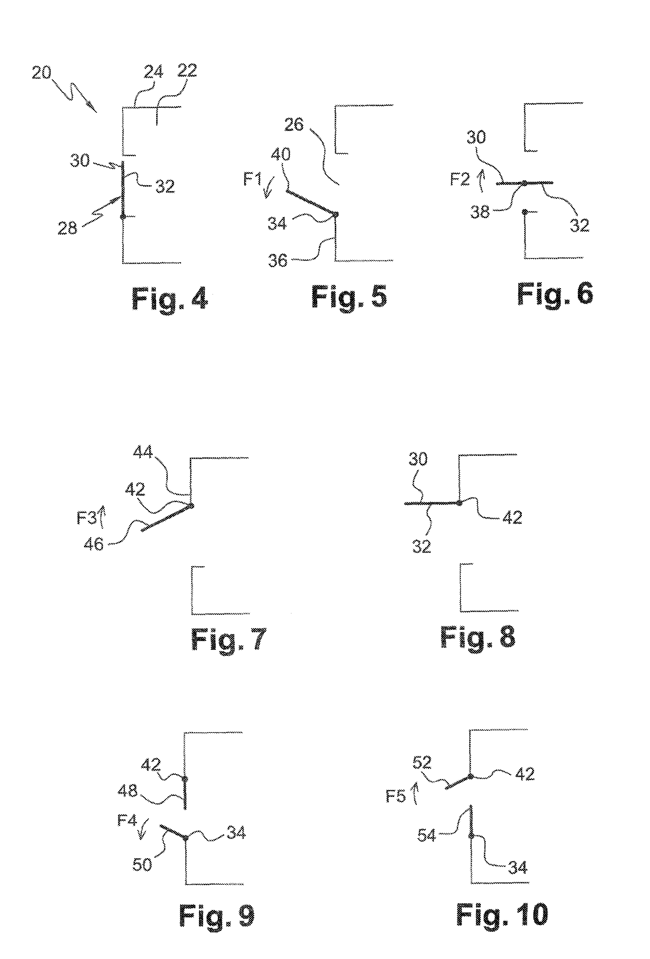

Tel que représenté aux figures 1 et 4, un agencement de rangement 20 comporte un réceptacle 22, ménagé à l'intérieur d'un élément de l'habitacle 24 *tel* qu'une porte, par exemple, et une ouverture 26, située dans la partie haute du réceptacle 22. L'ouverture 26 comporte un couvercle 28 qui, lorsqu'il est en position fermée, obture la totalité de l'ouverture 26 en s'étendant dans un plan globalement vertical. Le couvercle 28 comporte une face externe 30, tournée vers l'extérieur du réceptacle 22 et visible lorsque le couvercle 28 est en position fermée, et une face interne 32 tournée vers l'intérieur du réceptacle 22.

Le couvercle 28 est monté mobile autour d'un premier axe horizontal 34 situé ici au droit d'un bord inférieur 36 de l'ouverture 26.

Le couvercle 28 est aussi monté mobile autour d'un deuxième axe horizontal 38 situé à mi-hauteur de l'ouverture 26.

Tel que représenté aux figures 2 et 5, l'agencement 20 est passé de sa position fermée à une position ouverte par un basculement du couvercle 28, autour du premier axe horizontal 34, dans le sens anti-horaire indiqué par la flèche F1. Au cours de ce changement de position, le deuxième axe 38 est resté solidaire du couvercle 28.

Tel que représenté aux figures 3 et 6, l'agencement 20 est passé de sa position fermée à une position d'utilisation, par une rotation du couvercle 28 autour du deuxième axe horizontal 38, dans la sens horaire indiqué par la flèche F2. Dans sa position d'utilisation, le couvercle 28 est verrouillé en position horizontale de façon que la face externe 30 du couvercle 28 forme une surface d'appui sensiblement horizontale et orientée vers le haut, tel qu'un accoudoir ou une tablette par exemple.

Lorsqu'un passager du véhicule veut ranger un objet dans le rangement, il tire sur une partie supérieure 40 du couvercle 28 de façon à faire pivoter ce dernier autour de l'axe horizontal 34 et il introduit l'objet dans le réceptacle 22 par l'ouverture 26.

Lorsqu'un passager veut utiliser la fonction accoudoir du couvercle 28, il exerce une pression sur la partie supérieure 40 du couvercle 28 pour le faire pivoter autour du deuxième axe horizontal 38 jusqu'à son verrouillage en position horizontale d'utilisation.

Avantageusement, le couvercle 28 peut aller au-delà de sa position d'utilisation horizontale verrouillée ce qui permet de glisser un objet dans le rangement, même si le couvercle 28 est en position d'utilisation.

L'agencement 20 présente donc l'avantage d'offrir un rangement de plus grand volume puisque, même dans le cas où la hauteur du rangement est augmentée, la surface d'appui est toujours à la bonne hauteur.

De plus, si le passager a besoin de plus de place dans l'habitacle, il peut rabattre le couvercle 28 en position fermée.

L'agencement 20 présente aussi l'avantage d'offrir une surface d'appui se trouvant à une distance du passager qui est plus ergonomique pour ce dernier.

Avantageusement, le revêtement de la face externe 30 du couvercle 28 peut être le même que celui recouvrant la surface d'habillage du panneau de porte de l'élément 24. L'agencement 20 présente donc l'avantage d'être plus pratique et plus économique car on utilise pour la surface d'appui le revêtement déjà existant de la face externe 30 du couvercle 28. Il n'est donc pas nécessaire de prévoir un revêtement supplémentaire pour la face interne 32 du couvercle 28.

Il peut également être prévu un rembourrage de la face externe 30 du couvercle 28 de façon que la surface d'appui soit plus confortable si elle a une fonction d'accoudoir.

Dans le mode de réalisation décrit, le rangement est agencé dans une porte mais il peut aussi être agencé dans tout autre élément d'habillage 24 du véhicule tel qu'une console par exemple.

Tel que décrit à la figure 7, selon une première variante de l'agencement 20, le couvercle 28 est monté mobile autour d'un axe horizontal unique 42 situé au droit d'un bord supérieur 44 de l'ouverture 26.

A la figure 7, le couvercle 28 est passé de sa position fermée, non représentée, dans laquelle le couvercle obture complètement l'ouverture 26 du réceptacle 22, à une position ouverte par une rotation autour de l'axe horizontal unique 42, dans le sens horaire indiqué par la flèche F3.

Tel que décrit à la figure 8, le couvercle 28 est passé de sa position fermée à une position d'utilisation horizontale verrouillée par une rotation autour de l'axe horizontal unique 42.

Ainsi, lorsqu'il doit ranger un objet à l'intérieur du rangement, le passager tire sur une partie intérieure 46 du couvercle 28 et soulève ce dernier de façon à le faire pivoter autour de l'axe horizontal unique 42.

Ensuite pour que le couvercle 28 puisse être utilisé comme surface d'appui, le passager continue à soulever le couvercle 28 jusqu'à ce qu'il soit verrouillé, en position horizontale.

Avantageusement, le couvercle 28 peut aller au delà de sa position d'utilisation verrouillée afin de glisser dans le réceptacle 22 des objets volumineux sans être gêné par la couvercle 28.

Selon une deuxième variante de l'agencement 20 décrite à la figure 9, le couvercle 28 comporte deux parties. Un volet supérieur 48 du couvercle 28 est monté à rotation autour de l'axe horizontal 42.

Un volet intérieur 50 du couvercle 28 est monté à rotation autour de l'axe horizontal inférieur 34. A la figure 6, l'agencement est passé d'une position fermée (non représentée) dans laquelle les deux volets 48 et 50 du couvercle 28 recouvrent la totalité de l'ouverture 26 du réceptacle 22, à une position ouverte dans laquelle le volet inférieur 50 du couvercle 28 a effectué une rotation autour de l'axe horizontal 34 inférieur dans le sens anti-horaire indiqué par la flèche F4.

Tel que représenté à la figure 10, l'agencement 20 est passé de sa position fermée à une position d'utilisation dans laquelle le volet supérieur 48 du couvercle 28 a effectué une rotation autour de l'axe horizontal supérieur 44 dans le sens horaire indiqué par la flèche F5 jusqu'à un position horizontale verrouillée.

Ainsi, lorsque l'utilisateur veut ranger un objet dans le réceptacle 22, il tire sur un bord supérieur 52 du volet inférieur 48 du couvercle 28 et fait pivoter le volet 48 vers le bas autour de l'axe horizontal inférieur 34 puis fait glisser l'objet par l'ouverture 26.

Lorsqu'i! veut utiliser la surface d'appui, il tire sur un bord inférieur 54 du volet supérieur 50 et fait pivoter le couvercle 28 autour de l'axe supérieur horizontal 44 jusqu'à ce que le volet supérieur 48 soit verrouillé en position horizontale de façon que la face externe 30 du volet 48 puisse être utilisée comme surface d'appui.

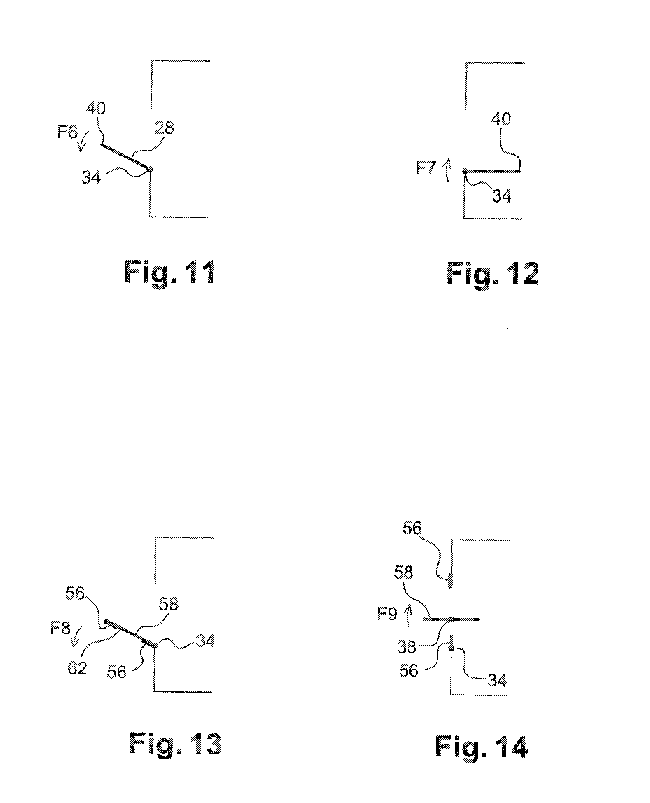

Tel que décrit dans l'agencement selon une troisième variante de la figure 11, le couvercle 28 est monté à rotation autour de l'axe horizontal unique inférieur 34. L'agencement 20 est passé d'une position fermée (non représentée), dans laquelle le couvercle 28 obture complètement l'ouverture 26 du réceptacle 22, à une position ouverte par une rotation du couvercle 28 vers l'extérieur du réceptacle 22, dans le sens anti-horaire indiqué par la flèche F6, autour de l'axe horizontal 34.

Tel que représenté à la figure 12, l'agencement 20 est passé de sa position fermée à sa position d'utilisation par une rotation, vers l'intérieur du réceptacle 22, dans le sens horaire indiqué par la flèche F7, autour de l'axe horizontal unique 34.

Ainsi lorsque le passager veut déposer un objet à l'intérieur du rangement, il tire sur la partie supérieure 40 du couvercle 28 et fait pivoter ce dernier autour de l'axe unique 34. Lorsqu'il veut utiliser la surface d'appui, le passager pousse sur la partie supérieure 40 du couvercle 28 et fait pivoter ce dernier autour de l'axe inférieur unique 34 de façon que la face externe 30 du couvercle 28 puisse être utilisée comme surface d'appui.

Cette variante de l'agencement 20 présente l'avantage de cacher le contenu du rangement lorsqu'il est en position d'utilisation.

Tel que décrit dans une quatrième variante de l'agencement représentée à la figure 13, le couvercle 28 comporte deux parties : un cadre 56 et une partie centrale 58 montée à l'intérieur dudit cadre 56. En position fermée, non représentée, le cadre 56 et la partie centrale 58 du couvercle 28 obturent complètement l'ouverture 26 du réceptacle 22.

Le cadre 56 est monté à rotation autour de l'axe inférieur horizontal 34 et la partie centrale 58 est montée à rotation autour de l'axe horizontal 38.

Dans cette variante, l'agencement 20 est passé de sa position fermée à une position ouverte par une rotation, dans le sens anti-horaire indiqué par la flèche F10, de l'ensemble du couvercle 28 comprenant le cadre 56 et la partie centrale 58, formant un ensemble solidaire et plan, autour de l'axe inférieur horizontal 34.

Tel que représenté à la figure 14, l'agencement 20 est passé de sa position fermée à une position d'utilisation par une rotation de la partie centrale 58 du couvercle 28 autour de l'axe horizontal 38, de façon que la face externe 30 du couvercle 28 forme la surface d'appui, le cadre 56 restant dans sa position initiale, c'est-à-dire en position fermée.

Ainsi lorsqu'il veut ranger un objet à l'intérieur du réceptacle 22, le passager tire sur une partie supérieure 60 du cadre 56 de façon à faire pivoter l'ensemble du couvercle 28 autour de l'axe, inférieur horizontal 34.

Lorsqu'il veut faire passer l'agencement 20 en position d'utilisation, il appuie sur la partie supérieure 62 de la partie centrale 58 du couvercle 28 pour la faire pivoter autour de l'axe horizontal 38 jusqu'à verrouillage en position horizontale, dans laquelle la face externe 30 du couvercle 28 forme surface d'appui.

## Revendications

1. Agencement d'un rangement (20) à l'intérieur d'un véhicule automobile, comportant un réceptacle (22) dont une partie haute comporte une ouverture (26) munie d'un couvercle (28) qui est monté articulé par rapport au réceptacle (22) entre une position fermée, dans laquelle il obture l'ouverture (26) du réceptacle (22) en s'étendant dans un plan sensiblement vertical, et une position ouverte, dans laquelle l'ouverture (26) du réceptacle (22) est au moins partiellement accessible, **caractérisé en ce que** le couvercle (28) est monté mobile entre sa position fermée et une position d'utilisation, distincte de sa position ouverte, dans laquelle il est verrouillé en position horizontale de façon qu'il constitue une surface d'appui.

2. Agencement selon la revendication 1, **caractérisé en ce que** la surface d'appui est constituée par la face externe (30) du couvercle (28).

3. Agencement selon l'une quelconque des revendications précédentes, **caractérisé en ce que** le couvercle (28) est monté à rotation autour d'un axe unique (44), agencé sensiblement au droit du bord supérieur de l'ouverture (26).

4. Agencement selon l'une quelconque des revendications 1 ou 2, **caractérisé en ce que** le couvercle (28) est monté à rotation autour d'un axe unique (34) agencé au droit du bord inférieur (36) de l'ouverture (26).

5. Agencement selon l'une quelconque des revendications 1 ou 2, **caractérisé en ce que** le couvercle (26) est monté à rotation autour d'un premier axe (34) agencé au droit du bord inférieur (36) de l'ouverture (26) et d'un deuxième axe (38) situé à mi-hauteur de l'ouverture (26).

6. Agencement selon l'une quelconque des revendications 1 ou 2, **caractérisé en ce que** le couvercle (28) comporte un volet supérieur (48) monté à rotation autour d'un axe supérieur (42) agencé au droit du bord supérieur (44) de l'ouverture (26) et un volet inférieur (50) monté à rotation autour d'un axe inférieur (34) agencé au droit du bord inférieur (36) de l'ouverture (26).

7. Agencement selon l'une quelconque des revendications 1 ou 2, **caractérisé en ce que** le couvercle (26) comporte un cadre (56) monté à rotation autour d'un axe (34) agencé au droit du bord inférieur (36) de l'ouverture (26) et une partie centrale (58), solidaire du cadre (56) et montée à rotation autour d'un axe (38) situé à mi-hauteur de l'ouverture (26).

8. Agencement selon l'une quelconque des revendications précédentes, **caractérisé en ce que** le réceptacle (22) est ménagé à l'intérieur d'une porte et **en ce que** la surface d'appui constitue un accoudoir.
